(19) Europäisches Patentamt
European Patent Office
Office européen des brevets

(11) **EP 1 634 644 B1**

(12) **EUROPEAN PATENT SPECIFICATION**

(45) Date of publication and mention of the grant of the patent:
**26.01.2011 Bulletin 2011/04**

(51) Int Cl.:
***B01J 23/26*** *(2006.01)* ***C08G 65/26*** *(2006.01)*

(21) Application number: **05018989.3**

(22) Date of filing: **01.09.2005**

(54) **Processes for the preparation of double metal cyanide (DMC) catalysts**

Herstellungsverfahren von Doppelmetallcyanidkatalysatoren (DMC Katalysatoren)

Procédé de préparation de catalyseurs à base de cyanures métalliques doubles (catalyseurs DMC)

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.09.2004 US 939756**

(43) Date of publication of application:
**15.03.2006 Bulletin 2006/11**

(73) Proprietor: **Bayer MaterialScience LLC**
**Pittsburgh, PA 15205-9741 (US)**

(72) Inventors:
- **Combs, George G.**
  **McMurray, PA 15317 (US)**
- **McDaniel, Kenneth G.**
  **Charleston, WV 25311 (US)**

(74) Representative: **Klimiuk, Meike et al**
**Bayer MaterialScience AG**
**Law & Patents**
**Patents and Licensing**
**Gebäude Q 18**
**51368 Leverkusen (DE)**

(56) References cited:
**EP-A- 1 510 534** **WO-A-01/89688**
**WO-A-03/106025** **US-A- 4 477 589**
**US-A- 5 482 908** **US-A- 5 783 513**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates in general to a process for making double metal cyanide (DMC) catalysts, and more particularly, to a process for preparing substantially amorphous DMC catalysts at low molar ratios of transition metal salt to cyanide metal salt by simultaneously controlling the alkalinity of the metal salt used to make the catalyst, the molar ratio of water to total cations, the molar ratio of ligand to transition metal cation, and the molar ratio of metal salt anion to metal cyanide anion.

BACKGROUND OF THE INVENTION

Double metal cyanide (DMC) complexes are well known to those skilled in the art for catalyzing epoxide polymerization. Double metal cyanide (DMC) catalysts for the polyaddition of alkylene oxides to starter compounds, which have active hydrogen atoms, are described, for example, in U.S. Pat. No's. 3,404,109, 3,829,505, 3,941,849 and 5,158,922. These active catalysts yield polyether polyols that have low unsaturation compared to similar polyols made with basic (KOH) catalysis. DMC catalysts can be used to make many polymer products, including polyether, polyester, and polyetherester polyols. The polyether polyols obtained with DMC catalysts can be processed to form high-grade polyurethanes (e.g., coatings, adhesives, sealants, elastomers and foams).

DMC catalysts are usually prepared by the reaction of an aqueous solution of a metal salt with an aqueous solution of a metal cyanide salt in the presence of an organic complexing ligand such as, for example, an ether. In a typical catalyst preparation, aqueous solutions of zinc chloride (in excess) and potassium hexacyanocobaltate are mixed, and dimethoxyethane (glyme) is subsequently added to the formed suspension. After filtration and washing of the catalyst with aqueous glyme solution, an active catalyst of formula:

$$Zn_3[Co(CN)_6]_2 \cdot xZnCl_2 \cdot yH_2O \cdot zglyme$$

is obtained.

DMC catalysts prepared in this way have a relatively high degree of crystallinity. Such catalysts are used for making epoxide polymers. The activity for epoxide polymerization, which exceeds the activity available from the commercial standard (KOH), was at one time thought to be adequate. Later, it became apparent that more active catalysts would be important for the successful commercialization of polyols from DMC catalysts.

Highly active DMC catalysts are typically substantially non-crystalline, as is evidenced by powder X-ray diffraction patterns that lack many sharp lines. The catalysts are active enough to allow their use at very low concentrations, often low enough to overcome any need to remove the catalyst from the polyol.

Hinney et al., in U.S. Pat. No. 5,158,922, disclose that at least a 100% excess of transition metal salt is needed to prepare highly active double metal cyanide (DMC) catalysts. For a double metal cyanide compound such as zinc hexacyanocobaltate with the chemical formula $Zn_3[Co(CN)_6]_2$ , the use of 3.0 moles of transition metal cation per mole of metal cyanide anion in the catalyst preparation provides a 100% excess.

As those skilled in the art may be aware, significant drawbacks can be encountered in using 100% more than the stoichiometric requirement of metal salt. Such disadvantages include greatly increasing the cost of catalyst production and increasing the likelihood of operator exposure to hazardous materials and/or equipment corrosion. Nevertheless, the previously described processes for preparation of highly active substantially amorphous DMC catalysts employ at least 3.0 moles of transition metal cation per mole of metal cyanide anion. For example, U.S. Pat. No. 5,470,813, issued to Le-Khac, describes substantially amorphous or non-crystalline catalysts that have much higher activities compared with earlier DMC catalysts. The DMC catalysts made according to the methods of Le-Khac '813 can have transition metal cation to metal cyanide molar ratios of approximately 25. Other highly active DMC catalysts include, in addition to a low molecular weight organic complexing agent, from about 5 to about 80 wt. % of a polyether such as a polyoxypropylene polyol (see U.S. Pat. Nos. 5,482,908 and 5,545,601).

U.S. Pat. No. 5,627,122, issued to Le-Khac et al., describes substantially crystalline, highly active, double metal cyanide (DMC) complex catalysts. The catalysts contain less than about 0.2 moles of metal salt per mole of DMC compound in the catalyst.

Combs et al., in U.S. Pat. No. 5,783,513, describe very active, amorphous double metal cyanide (DMC) catalysts with improved performance, which is attributed to the use of basic compounds that control alkalinity of the reaction system. Desirable alkalinities are taught to range only from 0.20% to 2.0% based on the amount of transition metal salt used in the reaction. Alternatively, those alkalinities, when expressed as moles of alkaline metal compound per mole of transition metal salt, range from 0.0033 to 0.0324. The catalysts of Combs et al. may readily be identified by the presence of a peak in the infrared spectrum at approximately 642 $cm^{-1}$. The catalyst-making procedures taught require mixing

aqueous solutions of zinc chloride and potassium hexacyanocobaltate in the presence of organic complexing agents such as tert-butyl alcohol (TBA).

U.S. Pat No. 6,696,383, issued to Le-Khac et al., teaches the addition of alkali metal salts during the preparation of DMC catalysts to enhance activity and reduce formation of small amounts of very high molecular weight polyol impurities.

None of the above-referenced art provides a means to reduce the amount of metal salt in the catalyst producing process to less than a 100% excess of transition metal salt. That is, more than 3.0 moles of transition metal cation are used per mole of metal cyanide anion. Several workers have attempted to find ways around this requirement.

One solution is described in U.S. Pat. No. 5,952,261, issued to Combs, in which cyanide-free Group IIA alkaline earth metal salts are used in combination with a stoichiometric amount (or less) of transition metal salt to prepare active double metal cyanide (DMC) catalysts. Combs '261 also discloses in its experimental examples use of alkaline metal compounds at levels of 0.079 to 0.15 moles of alkaline metal compound per mole of transition metal salt corresponding to about 5% to 10% alkalinity expressed as metal oxide based on metal salt. However, the '261 patent is silent as to whether the catalyst is crystalline or amorphous.

Eleveld et al., in U.S. Pat. No 6,716,788 describe a process for making double metal cyanide catalysts where even higher alkalinity metal salt is disclosed. Alkalinities ranging from 0.03 to 0.08 moles of alkaline metal salt to transition metal salt are used in experimental examples although the claims recite levels as high as 0.4 moles. It is noted that all examples in the '788 patent employ more than 3.0 moles of transition metal cation per mole of metal cyanide anion.

Thus, neither the Combs '261 patent nor the '788 patent provides any framework or guidance as to specific adjustment of molar ratios of water to ionic species, or molar ratios of ligand to transition metal cation, in order to prepare highly active amorphous DMC catalysts with less than 100% excess of metal salt. As those skilled in the art are aware, even the best double metal cyanide (DMC) catalysts can be improved. Less expensive catalysts with increased activity always remain a desired goal. Therefore, a need always exists in the art for processes for producing double metal cyanide (DMC) catalysts that require a much lower amount of transition metal salt, but which still provide catalysts with the sought after high activity.

## SUMMARY OF THE INVENTION

Accordingly, the present invention provides such processes in which highly active, substantially amorphous double metal cyanide (DMC) catalysts can be prepared with very low mole ratios of metal salt to mole of cyanide salt metal by simultaneously controlling the alkalinity of the transition metal salt, the molar ratio of water to total cations, the molar ratio of ligand to transition metal cation, the molar ratio of metal salt anion to metal cyanide anion, and the presence of a polymeric complexing ligand during the catalyst precipitation step.

The inventive process as defined in the appended claims yields DMC catalysts that are substantially amorphous and which exhibit a characteristic peak in the infrared spectrum in the range of about 600-650 $cm^{-1}$. The DMC catalysts produced by the inventive process can be used to produce polyether polyols, which in turn can be processed to form high-grade polyurethanes.

These and other advantages and benefits of the present invention will be apparent from the Detailed Description of the Invention herein below.

## BRIEF DESCRIPTION OF THE FIGURES

The present invention will now be described for purposes of illustration and not limitation in conjunction with the figures, wherein:

Figure 1 shows the X-ray diffraction pattern of the comparative DMC catalysts and one DMC catalyst made by the inventive process;

## DETAILED DESCRIPTION OF THE INVENTION

The present invention will now be described for purposes of illustration and not limitation. Equivalent weights and molecular weights given herein in Daltons (Da) are number average equivalent weights and number average molecular weights respectively, unless indicated otherwise.

The present inventors have surprisingly found that a process for the preparation of double metal cyanide catalysts using less than 100% excess of metal salt are possible by

using alkali metal salts which are free of cyanide;

Without wishing to be bound by any theory, the inventors herein speculate that properly manipulating these process parameters promotes formation of soluble, complexed cationic species involving the transition metal cation and anion such that they are readily incorporated into the catalyst matrix.

The inventive process provides for the preparation of highly active, substantially amorphous double metal cyanide (DMC) catalysts, by reacting, in aqueous solution, a transition metal salt having an alkalinity of at least 2 wt. %, with a metal cyanide salt such that the molar ratio of transition metal cation to metal cyanide anion is less than 2.9:1, more preferably less than 2.5:1 and most preferably less than 1.5:1. The alkalinity is expressed as weight percent transition metal oxide based on the amount of transition metal salt. The reaction step is understood herein to be the act of mixing the metal salt and the metal cyanide salt to produce a precipitated solid. In some embodiments of the present invention, the reaction step takes place in the presence of an organic complexing ligand.

In the present invention, a cyanide-free compound (i.e., an anion and an alkali metal) is added in the reaction step to maintain a minimum mole ratio of cyanide-free anion to metal cyanide anion above 3 and the mole ratio of water to total cations is less than 150. "Total cations" include those from the alkali metal salt and the transition metal salt. More preferably, the mole ratio of water to cations is less than 75 and the mole ratio of cyanide-free anion to metal cyanide anion is above 6. The alkali metal salt anion may be the same as or different from the transition metal salt anion. Also the amount of complexing organic ligand used in the reaction step is greater than 1 mole of ligand per mole of transition metal salt, more preferably greater than 5. The precipitated solid may or may not be treated with a functionalized polyether after the reaction step.

The inventive process produces substantially amorphous, highly active, double metal cyanide (DMC) catalysts with a characteristic peak in the range of 600 to 650 $cm^{-1}$ as described in copending patent application EP 1510534 A.

Transition metal salt

The transition metal salt used in the processes of the present invention preferably is water soluble and has the formula (I),

$$M(X)_n \qquad (I)$$

in which M is chosen from Zn(II), Fe(II), Ni(II), Mn(II), Co(II), Sn(II), Pb(II), Fe(III), Mo(IV), Mo(VI), Al(III), V(V), V(IV), Sr (II), W(IV), W(VI), Cu(II), and Cr(III). More preferably, M may be chosen from Zn(II), Fe(II), Co(II), and Ni(II).

In the above formula (I), X is preferably an anion chosen from halides, hydroxides, sulfates, carbonates, cyanides, oxalates, thiocyanates, isocyanates, isothiocyanates, carboxylates, and nitrates.

The value of n is from 1 to 3 and satisfies the valency state of M.

Examples of suitable transition metal salts include, but are not limited to, zinc chloride, zinc bromide, zinc acetate, zinc acetonylacetate, zinc benzoate, zinc nitrate, iron(II) sulfate, iron(II) bromide, cobalt(II) chloride, cobalt(II) thiocyanate, nickel(II) formate, nickel(II) nitrate, and the like, and mixtures thereof; with zinc chloride being the most preferred.

As mentioned hereinabove, the alkalinity of the transition metal salt used in the inventive process is one of the variables to be controlled. In the inventive process, aqueous solutions of the transition metal salt preferably have an alkalinity of greater than 2.0 wt. % as metal oxide based on the amount of metal salt. For example, if the transition metal salt used is zinc chloride (commonly used to make zinc hexacyanocobaltate), the alkalinity of aqueous zinc chloride used in the process preferably may range from 2.1 to 20 wt. % as zinc oxide based on the amount of zinc chloride in the solution. A more preferred range for the transition metal salt is 2.8 to 15 wt. % as transition metal oxide; most preferred is the range from 3.0 to 12 wt. % as transition metal oxide. The alkalinity of the transition metal may be in an amount ranging between any combination of these values, inclusive of the recited values.

The alkalinity of the transition metal salt often depends on the source of the metal salt. Technical-grade transition metal salts, e.g., technical-grade zinc chloride, are particularly preferred in large-scale catalyst preparations because of the relatively lower cost. However, technical-grade transition metal salts often contain acidic impurities, and aqueous solutions of these salts can have extremely low alkalinities (less than 0.2 wt. % as metal oxide). For example, the inventors herein have found that technical grade zinc chloride solutions normally have alkalinities within the range of 0 to 0.3 wt. % as zinc oxide. In such instances, the inventors herein have added a base to the aqueous solution to adjust the alkalinity to a value of more than 2.0 wt. % as metal oxide. Suitable bases are compounds that when added to pure water result in a solution having a pH greater than 7.0. The base may be an inorganic base, such as a metal oxide, an alkali metal hydroxide, or an alkali metal carbonate, or an organic base, such as an amine. The basic compound may be added to the metal salt solution or the metal cyanide salt solution prior to or during mixing of the reagents in the reaction step.

Metal cyanide salt

The metal cyanide salt reacted in the inventive processes preferably is water soluble and has the formula (II),

$$(Y)_a\, M'(CN)_b\, (A)_c \qquad (II)$$

in which M' is chosen from Fe(II), Fe(III), Co(II), Co(III), Cr(II), Cr(III), Mn(II), Mn(III), Ir(III), Ni(II), Rh(III), Ru(II), V(IV), and V(V). More preferably, M' is chosen from Co(II), Co(III), Fe(II), Fe(III), Cr(II), Ir(III), and Ni(II). The metal cyanide salt may contain one or more of these metals.

In the above formula (II), Y is hydrogen, an alkali metal ion, or alkaline earth metal ion. A is an anion chosen from halides, hydroxides, sulfates, carbonates, cyanides, oxalates, thiocyanates, isocyanates, isothiocyanates, carboxylates, and nitrates. Both a and b are integers greater than or equal to 1; and the sum of the charges of a, b, and c balances the charge of M'. Suitable metal cyanide salts include, but are not limited to, potassium hexacyanocobaltate (III), potassium hexacyanoferrate(II), potassium hexacyanoferrate(III), calcium hexacyanocobaltate(III), lithium hexacyanoiridate(III), and the like. Alkali metal hexacyanocobaltates are most preferred.

Examples of double metal cyanide compounds that can be made by the process of the present invention include, but are not limited to, zinc hexacyanocobaltate(III), zinc hexacyanoferrate(III), zinc hexacyanoferrate(III), nickel (II) hexacyanoferrate(II), cobalt(II) exacyanocobaltate(III), and the like; with zinc hexacyanocobaltate(III) being the most preferred.

Cyanide-free compound

The inventive process occurs in the presence of a cyanide-free alkali metal containing compound. This alkali metal containing compound is included to maintain the molar ratio of cyanide-free anion to metal cyanide salt anion. Of the alkali metals, particularly preferred are lithium, sodium, potassium, and cesium. The cyanide free compound preferably has an anion chosen from halides, hydroxides, sulfates, carbonates, oxalates, carboxylates and nitrates. Sodium and potassium salts are most preferred.

Organic complexing agent

The inventive process occurs in the presence of an organic complexing agent, i.e., the complexing agent may be added during preparation of the catalyst. An excess amount of the complexing agent is preferably used and the complexing agent is preferably relatively soluble in water. Suitable complexing agents are those commonly known in the art, as taught, for example, in U.S. Pat. No. 5,158,922. Preferred complexing agents are water-soluble heteroatom-containing organic compounds that can complex with the double metal cyanide compound. Suitable complexing agents include, but are not limited to, alcohols, aldehydes, ketones, ethers, esters, amides, ureas, nitrites, sulfides, and mixtures thereof. Preferred complexing agents are water-soluble aliphatic alcohols chosen from ethanol, isopropyl alcohol, n-butyl alcohol, isobutyl alcohol, sec-butyl alcohol, 2-methyl-3-butene-2-ol, 2-methyl-3-butenyl-2-ol, and tert-butyl alcohol. More preferred are 2-methyl-3-butene-2-ol, 2-methyl-3-butenyl-2-ol and tert-butyl alcohol (TBA). Tert-butyl alcohol is most preferred.

Catalysts made by the process of the present invention are substantially amorphous (non-crystalline). By "substantially amorphous," the inventors herein mean that the catalyst is lacking a well-defined crystal structure, or characterized by the substantial absence of sharp lines in the powder X-ray diffraction pattern of the composition. Conventional zinc hexacyanocobaltate-glyme catalysts (such as those described in U.S. Pat. No. 5,158,922) show a powder X-ray diffraction pattern containing many sharp lines, indicative of a high degree of crystallinity. Zinc hexacyanocobaltate prepared in the absence of a complexing agent is highly crystalline and is inactive for epoxide polymerization. Catalysts made by the inventive process are substantially amorphous and highly active.

Functionalized Polymer

DMC catalysts produced by the processes of the present invention may optionally include a functionalized polymer or its water-soluble salt. By "functionalized polymer" the inventors herein mean a polymer that contains one or more functional groups containing oxygen, nitrogen, sutfur, phosphorus, or halogen, wherein the polymer, or a water-soluble salt derived from it, has relatively good solubility in polar solvents, i.e., at least 0.5 wt. % of the polymer or its salt dissolves at room temperature in water or mixtures of water with a water-miscible organic solvent. Examples of water-miscible organic solvents include, but are not limited to, tetrahydrofuran, acetone, acetonitrile, tert-butyl alcohol, and the like. Water solubility is important for incorporating the functionalized polymer into the catalyst structure during formation and precipitation of the double metal cyanide compound.

Preferred functionalized polymers are represented by the formula (III),

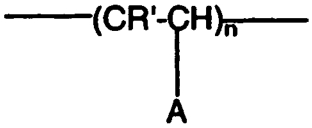

**(III)**

in which R' is hydrogen, —COOH, or a $C_1$-$C_5$ alkyl group, and A is one or more functional groups chosen from —OH, —$NH_2$, —NHR, —$NR_2$, —SH, —SR, —COR, —CN, —C, —Br, —$C_6H_4$-OH, —$C_6H_4$-$C(CH_3)_2$OH, —$CONH_2$, —CONHR, —CO-$NR_2$, —OR, —$NO_2$, —NHCOR, —NRCOR, —COOH, —COOR, —CHO, —OCOR, —COO-R-OH, —$SO_3$H, —CONH-R-$SO_3$H, pyridinyl, and pyrrolidonyl, in which R is a $C_1$-$C_5$ alkyl or alkylene group, and n has a value within the range of 5 to 5,000. More preferably, n is within the range of 10 to 500.

The molecular weight of the functionalized polymer can vary over a fairly wide range. Preferably, the number average molecular weight is within the range of 200 to 500,000; more preferably from 500 to 50,000. The molecular weight of the functionalized polymer may be in an amount ranging between any combination of these values, inclusive of the recited values.

Optionally, the functionalized polymer also includes recurring units derived from a non-functionalized vinyl monomer such as an olefin or diene, e.g., ethylene, propylene, butylenes, butadiene, isoprene, styrene, or the like, provided that the polymer or a salt derived from it has relatively good solubility in water or mixtures of water and a water-miscible organic solvent.

Suitable functionalized polymers include, but are not limited to, poly(acrylamide), poly(acrylamide-co-acrylic acid), poly(acrylic acid), poly(2-5 acrylamido-2-methyl-1-propanesulfonic acid), poly(acrylic acid-co-maleic acid), poly (acrylonitrile), poly(alkyl acrylate)s, poly(alkyl methacrylate)s, poly(vinyl methyl ether), poly(vinyl ethyl ether), poly(vinyl acetate), poly(vinyl alcohol), poly(N-vinylpyrrolidone), poly(N-vinylpyrrolidone-co-acrylic acid), poly(N,N-dimethylacrylamide), poly(vinyl methyl ketone), poly(4-vinylphenol), poly(4-vinylpyridine), poly(vinyl chloride), poly(acrylic acid-co-styrene), poly(vinyl sulfate), poly(vinyl sulfate) sodium salt, and the like.

Preferred functionalized polymers are polyethers, particularly preferred are polyether polyols. Suitable polyethers for use in the processes of the present invention include polyethers produced by ring-opening polymerization of cyclic ethers, and epoxide polymers, oxetane polymers, tetrahydrofuran polymers, and the like. Any method of catalysis may be used to make the polyethers. The polyethers can have any desired end groups, including, for example, hydroxyl, amine, ester, ether, or the like. Preferred polyethers are polyether polyols having average hydroxyl functionalities from 1 to 8 and number average molecular weights within the range of 200 to 10,000, more preferably from 500 to 5000. These are usually made by polymerizing epoxides in the presence of active hydrogen-containing initiators and basic, acidic, or organometallic catalysts (including DMC catalysts). Useful polyether polyols include poly(oxypropylene) polyols, poly(oxyethylene) polyols, EO-capped poly(oxypropylene) polyols, mixed EO-PO polyols, butylene oxide polymers, butylene oxide copolymers with ethylene oxide and/or propylene oxide, polytetramethylene ether glycols, and the like Most preferred are poly(oxypropylene) polyols and mixed EO-PO polyols, particularly monols and diols having number average molecular weights within the range of 500 to 4000.

Other functionalized polymers may include polycarbonates, oxazoline polymers, polyalkylenimines, maleic acid and maleic anhydride copolymers, hydroxyethyl cellulose, starches, and polyacetals. Thus, the functionalized polymer may be, for example, poly(ethylene glycol adipate), poly(dipropylene glycol adipate), poly(1,6-hexanediol carbonate), poly(2-ethyl-2-oxazoline), poly(vinyl butyral-co-vinyl alcohol-co-vinyl acetate), and the like, and salts thereof.

Catalysts made by the process of the present invention optionally contain up to 80 wt. % (based on the total amount of catalyst) of the functionalized polymer. More preferably, the catalysts contain from 5 to 70 wt. % of the polymer, most preferred is the range from 10 to 60 wt. %. At least 2 wt. % of the polymer is needed to significantly improve the catalyst activity compared with a catalyst made in the absence of the polymer. Catalysts that contain more than 80 wt. % of the polymer are generally no more active, and are often difficult to isolate. The functionalized polymer may be present in the catalyst in an amount ranging between any combination of these values, inclusive of the recited values.

Alternatively, the functionalized polymer may be partially or completely replaced with complex organic ligands such as those described for example in U.S. Pat. Nos. 6,204,357, 6,391,820, 6,468,939, 6,528,616, 6,586,564, 6,586,566 and 6,608,231.

Substantially amorphous catalysts produced by the process of the present invention may take the form of powders or pastes. Preferred paste catalysts contain from 10 to 60 wt. % of a double metal cyanide compound, from 40 to 90 wt. % of an organic complexing agent, and from 1 to 20 wt. % of water. In preferred paste catalysts, at least 90% of the catalyst particles have a particle size less than 10 microns as measured by light scattering in polyether polyol

dispersions of the catalyst particles. Paste catalysts and methods for making them are fully described in U.S. Pat. No. 5,639,705.

Catalysts produced by the processes of the present invention have unique infrared spectra that result from the use of metal salts with relatively high alkalinity. The catalysts have a unique peak in the range of 600 to 650 $cm^{-1}$ as detailed in copending patent application EP 1 510 534 A. Preferably, the intensity of this peak increases as the alkalinity of the metal salt solution used in making the catalyst increases.

Reactors and processing conditions

The catalysts made by the process of the present invention are useful in any reactor configuration that can be used to prepare polyethers or polyether-ester polyols. The semibatch process is widely used and these reactors could utilize a range of mixing conditions with energy inputs from 0.02 to 3.9 KW per $m^3$(0.5 to 20 horsepower per 1000 gallons) with mixing energies of 1 to 1.6 KW, per $m^3$ (5 to 8 hp/1000 gallons) proving particularly useful. Those skilled in the art will appreciate that the optimum energy input will likely vary with the product molecular weight, e.g., a greater amount of energy is preferred for products with higher viscosities. Other process conditions, which may be useful, include purging the reactor oxide-feed tube or pipe with nitrogen or another inert fluid or gas after completion of the oxide feed.

The DMC catalysts produced by the process of the present invention will also likely be particularly useful in a continuous reactor used to produce polyethers. For example, the catalyst can be charged to the reactors as a slurry in polyether, such as a 700 Da diol. In such instances, it may be particularly desirable to use a high-shear mixer or similar device to create a suspension with a low tendency to settle while it is in the catalyst charge vessel.

The inventors herein have found that DMC catalysts, including those produced by the inventive process, may appear to be inactive when initially charged to a starter such as a 700 Da propoxylated triol. The rate of activation of the catalyst can be influenced by applying vacuum to the reactor with or without a nitrogen purge and by increasing the concentration of oxide added to the reactor after the stripping procedure is complete. There also can be an advantage to using a lower temperature for activation (e.g. 105°C) and completing the major part of the alkoxylation at a higher temperature (e.g. 130°C).

In polyol production processes designed to operate at low DMC catalyst levels, the quality of propylene oxide and ethylene oxide can be important in obtaining a stable process and in producing a final product with low amounts of contaminants. Low levels of alkalinity or water in the propylene oxide can potentially inhibit or deactivate the catalyst, thereby resulting in high propylene oxide concentrations in the reactors and creating a safety hazard. The permissible water and alkalinity ranges are dependent on the catalyst level. For systems designed to operate at DMC catalyst levels in the range of 20 to 30 ppm, an alkalinity of less than 3 ppm as potassium hydroxide is preferred. The limiting values for alkalinity and water content will vary depending on the molecular weight of the polyol with these parameters being more important with low molecular weight polyols. In processes operating near the process limits, water levels in the range of several hundred ppm to a thousand ppm can affect process stability. The limiting values of these components may also be related to process type with the continuous process and the semibatch process with the continuous addition of a low molecular weight starter being more sensitive than a conventional semibatch process.

The organic components in the ethylene oxide and propylene oxide are less important for process stability; however, the presence of these materials can affect product quality. Propylene oxide can contain high molecular weight polypropylene oxide that can affect foaming process as these materials are converted to polyurethane. It may be necessary to use a carbon treatment or other process to remove the polypropylene oxide. Low molecular weight components like propionaldehyde, methyl formate, methyl propylether, methyl isopropylether, acetaldehyde, and furan may require an additional polyol process step to remove these components prior to foam manufacture.

EXAMPLES

Comparative Example 1

A DMC catalyst was made according to U.S. Pat. No. 5,783,513 as follows: a one-liter baffled, round-bottom flask was equipped with a mechanical paddle stirrer, heating mantle and a thermometer. Distilled water (275 g) was added to the flask followed by technical grade zinc chloride (76 g). Sufficient zinc oxide was added to bring the alkalinity of the system to 0.48% ZnO. The mixture was stirred at 400 rpm and heated to 50°C until the entire solid dissolved. Tert-butyl alcohol (40.0 g) was added to the solution and the temperature was maintained at 50°C.

A second solution was prepared with potassium hexacyanocobaltate (7.4 g) in distilled water (100 g). This potassium hexacyanocobaltate solution was added to the zinc chloride solution over one hour. After the addition was completed, stirring was continued for an additional 60 minutes at 50°C. A third solution of 1000 Da diol (7.9 g), tert-butyl alcohol (27.1 g), and water (14.9 g) was prepared and added to the flask at the end of the 60 minute period. The flask contents were stirred for an additional three minutes before the solid wet cake was collected by filtration.

The filter cake was resuspended in a beaker with 70/30 (w/w) tert-butyl alcohol/distilled water solution (100 g) using a homogenizer. The suspended slurry was transferred back to the initial reaction vessel and the beaker was rinsed with 70/30 (w/w) TBA/water solution (56 g) to transfer all of the material. The slurry was stirred for 60 minutes at 400 rpm and 50°C. A 1000 Da diol (2.0 g) was added to the flask and the slurry was stirred for three minutes. The mixture was filtered and the filter cake was resuspended in a beaker with the tert-butyl alcohol solution (100 g) using a homogenizer. The suspended slurry was transferred back to the initial reaction vessel and the beaker was rinsed with tert-butanol (44 g) to transfer all material. The slurry was stirred for 60 minutes at 400 rpm and 50°C. Then, a 1000 Da diol (1.0 g) was added and the mixture was stirred for three more minutes. The slurry was filtered and the solids were collected to dry in a vacuum oven overnight at 40°C to 50°C.

The final yield was 10.5 g of dry powder with the following percentages determined by elemental analysis: Zn = 23.5%; Co = 10.1 %; and Cl = 4.3%.

Comparative Example 2

A DMC catalyst was made without the addition of NaCl to maintain the molar ratio of metal salt anion to metal cyanide anion as follows: a one-liter baffled, round-bottom flask was equipped with a mechanical paddle stirrer, heating mantle and a thermometer. Distilled water (275 g) was added to the flask followed by technical grade zinc chloride (6.07 g). Tert-butyl alcohol (40.0 g) was added and the solution was heated to 50°C with stirring at 400 rpm.

A second solution was prepared with potassium hexacyanocobaltate (7.4 g) in distilled water (100 g). This potassium hexacyanocobaltate solution was added to the zinc chloride solution over one hour. After the addition was completed, stirring was continued for an additional 60 minutes at 50°C. A third solution of 1000 Da -diol (7.9 g), tert-butyl alcohol (27.1 g), and water (14.9 g) was prepared and added to the flask at the end of the 60 minute period. The flask contents were stirred for an additional three minutes before the solid wet cake was collected by filtration.

The filter cake was resuspended in the reaction vessel with 70/30 (w/w) tert-butyl alcohol/distilled water solution (156 g). The suspended slurry was stirred for 60 minutes at 400 rpm and 50°C. A 1000 Da diol (2.0 g) was added to the flask and the slurry was stirred for three minutes. The mixture was filtered and the filter cake was resuspended in the reaction vessel with tert-butyl alcohol (144 g). The slurry was stirred for 60 minutes at 400 rpm and 50°C. Then, a 1000 Da diol (1.0 g) was added and the mixture was stirred for three more minutes. The slurry was filtered and the solids were collected to dry in a vacuum oven overnight at 40°C to 50°C.

The final yield was 8.8 g of dry powder with the following percentages determined by elemental analysis: Zn = 24.6%; Co = 13.9%; and Cl = 0.8%.

Example 3

A DMC catalyst was made at a 2:2 Zn/Co mole ratio with NaCl added to maintain the molar ratio of metal salt anion to metal cyanide anion as follows: a one-liter baffled round bottom flask was equipped with a mechanical paddle stirrer, heating mantle, and a thermometer. Deionized water (275 g) was added to the flask followed by technical grade zinc chloride (6.07 g) and sodium chloride (60.0 g). Sufficient zinc oxide was added to bring the alkalinity of the system to 6.48% ZnO. Then, tert-butyl alcohol (40.0 g) was added and the solution was heated to 50°C with stirring at 400 rpm.

A second solution was prepared with potassium hexacyanocobaltate (7.4 g) in deionized water (100 g). The potassium hexacyanocobaltate solution was added to the zinc chloride solution over a one hour period. After addition was complete, stirring was continued for an additional 60 minutes at 50°C. A third solution of 1000 Da diol (7.9 g), tert-butyl alcohol (27.1 g), and water (14.9 g) was prepared and added to the flask at the end of the 60 minute period. The flask contents were sti/red for an additional three minutes before collecting the solid wet cake by filtration.

The filter cake was resuspended in a beaker with 70/30 (w/w) tert-butyl alcohol/deionized water solution (100 g) using a homogenizer. The suspended slurry was transferred back to the initial reaction vessel and the beaker was rinsed with 70/30 solution (56 g) to transfer all of the material. The slurry was stirred for 60 minutes at 400 rpm and 50°C. A 1000 Da diol (2.0 g) was added to the flask and the slurry was stirred for 3 minutes. The mixture was filtered and the filter cake was resuspended in a beaker with the tert-butyl alcohol solution (100 g) using a homogenizer. The suspended slurry was transferred back to the initial reaction vessel and the beaker was rinsed with tert-butanol (44 g) to transfer all of the material. The slurry was stirred for 60 minutes at 400 rpm at 50°C. A 1000 Da diol (1.0 g) was added and the mixture was stirred for three more minutes. The slurry was filtered and the solids were collected to dry in a vacuum oven overnight at 40°C to 50°C.

The final yield was 8.8 g of dry powder with the following percentages determined by elemental analysis: Zn = 24.2%; Co = 9.9%; and Cl = 4.8%.

Example 4

A DMC catalyst was made at a 2.0 Zn/Co mole ratio with NaCl added to maintain the molar ratio of metal salt anion to metal cyanide anion as follows: a one-liter baffled, round-bottom flask was equipped with a mechanical paddle stirrer, heating mantle and a thermometer. Distilled water (275g) was added to the flask followed by technical grade zinc chloride (5.73g) and sodium chloride (60.0g). Sufficient zinc oxide was added to bring the alkalinity of the system to 3.73% ZnO. Tert-butyl alcohol (40.0g) was added and the solution was heated to 50°C with stirring at 400 rpm.

A second solution was prepared with potassium hexacyanocobaltate (7.4g) in distilled water (100g). This potassium hexacyanocobaltate solution was added to the zinc chloride solution over one hour. After the addition was completed, stirring was continued for an additional 60 minutes at 50°C. A third solution of 1000 Da diol (7.9g), tert-butyl alcohol (27.1g), and water (14.9g) was prepared and added to the flask at the end of the 60 minute period. The flask contents were stirred for an additional three minutes before the solid wet cake was collected by filtration.

The filter cake was resuspended in a beaker with 70/30 (w/w) tert-butyl alcohol/distilled water solution (100g) using a homogenizer. The suspended slurry was transferred back to the initial reaction vessel and the beaker was rinsed with the 70/30 solution (56g) to transfer all of the material. The slurry was stirred for 60 minutes at 400 rpm and 50°C. A 1000 Da diol (2.0g) was added to the flask and the slurry was stirred for three minutes. The mixture was filtered and the filter cake was resuspended in a beaker with the 70/30 solution (100g) using a homogenizer. The suspended slurry was transferred back to the initial reaction vessel and the beaker was rinsed with tert-butanol (44g) to transfer all of the material. The slurry was stirred for 60 minutes at 400 rpm and 50° C. Then, a 1000 Da diol (1.0g) was added and the mixture was stirred for three more minutes. The slurry was filtered and the solids were collected to dry in a vacuum oven overnight at 40°C to 50°C.

The final yield was 8.7 grams of dry powder with the following percentages determined by elemental analysis: Zn = 21.0%; Co = 9.0%; and Cl = 4.8%.

Example 5

A DMC catalyst was made at a 1.5 Zn/Co mole ratio with Nacl added to maintain the molar ratio of metal salt anion to metal cyanide anion as follows: a one-liter baffled, round-bottom flask was equipped with a mechanical paddle stirrer, heating mantle and a thermometer. Distilled water (275g) was added to the flask followed by technical grade zinc chloride (4.22g) and sodium chloride (60.0g). Sufficient zinc oxide was added to bring the alkalinity of the system to 4.88% ZnO. Tert-butyl alcohol (40.0g) was added and the solution was heated to 50°C with stirring at 400 rpm.

A second solution was prepared with potassium hexacyanocobaltate (7.4g) in distilled water (100g). The potassium hexacyanocobaltate solution was added to the zinc chloride solution over one hour. After the addition was completed, stirring was continued for an additional 60 minutes at 50°C. A third solution of 1000 Da diol (7.9g), tert-butyl alcohol (27.1g), and water (14.9g) was prepared and added to the flask at the end of the 60 minute period. The flask contents were stirred for an additional three minutes before the solid wet cake was collected by filtration.

The filter cake was resuspended in a beaker with 70/30 (w/w) tert-butyl alcohol/distilled water solution (100g) using a homogenizer. The suspended slurry was transferred back to the initial reaction vessel and the beaker was rinsed with the 70/30 solution (56g) to transfer all of the material. The slurry was stirred for 60 minutes at 400 rpm and 50°C. A 1000 Da diol (2.0g) was added to the flask and the slurry was stirred for three minutes. The mixture was filtered and the filter cake was resuspended in a beaker with the 70/30 solution (100g) using a homogenizer. The suspended slurry was transferred back to the initial reaction vessel and the beaker was rinsed with tert-butanol (44g) to transfer all of the material. The slurry was stirred for 60 minutes at 400 rpm and 50°C. Then a 1000 Da diol (1.0g) was added and the mixture was stirred for three more minutes. The slurry was filtered and the solids were collected to dry in a vacuum oven overnight at 40°C to 50°C.

The final yield was 5.7g of dry powder with the following percentages determined by elemental analysis: Zn = 22.4%; Co = 9.6%; and Cl = 4.2%.

One factor controlling catalyst activity is the amount of alkalinity actually incorporated into the compound. The alkalinity of aqueous zinc chloride solutions reported in Table I below was measured by potentiometric titration with standardized 0.1 N aqueous hydrochloric acid as follows: aqueous HCl (about 0.1 N) was standardized by potentiometrically titrating accurately weighed samples (about 0.15 g) of dry tris(hydroxymethyl) aminomethane (THAM) in distilled water (80 ml). The endpoint was determined graphically.

$$\text{Normality of the HCl solution} = \frac{\text{\# grams of THAM}}{0.12114 \times \text{volume of HCl (in ml)}}$$

Zinc chloride samples were analyzed as follows. A sample was dissolved in distilled water to give an approximately 8.5 wt. % zinc chloride solution. The sample was titrated with standardized 0.1 N aqueous HCl solution. The volume of titrant needed to reach the equivalence point was determined graphically. Alkalinity (expressed as wt. % ZnO) was calculated as follows:

$$Wt.\%\ ZnO = \frac{(V \times N \times 4.0685 \times 100)}{(W \times \%\ ZnCl_2)}$$

where V represents the volume of HCl (in ml) needed to reach the equivalence point, N represents the normality of the HCl solution, W represents the weight of the zinc chloride sample (in grams), and % $ZnCl_2$ represents the weight percentage of zinc chloride in the original sample.

Table I summarizes the alkalinity, zinc to cobalt mole ratio, ligand to zinc mole ratio, water to cation mole ratio and the catalyst morphology as determined by X-ray diffraction pattern for the catalysts made in the examples. As will be apparent by reference to Table I, the inventive DMC catalysts, although having a Zn/Co ratio much below those of previously disclosed catalysts, had a substantially amorphous X-ray diffraction pattern. The catalyst produced in Comparative Example 1 (according to U.S. Pat. No. 5,783,513) exemplifies this substantially amorphous pattern.

**TABLE I**

| Ex. No. | Alkalinity (wt. % | Zn/Co Mole ratio | Ligand/Zn | $H_2O$/Cation Mole ratio | Cl/Co Mole Ratio | X-ray pattern |
|---|---|---|---|---|---|---|
| C-1 | 0.48 | 25.1 | 0.97 | 33 | 50 | Substantially amorphous |
| C-2 | 0.32 | 2.0 | 10.9 | 187 | 4 | Substantially crystalline |
| 3* | 6.49 | 2.2 | 10.9 | 18 | 50 | Substantially amorphous |
| 4* | 3.73 | 2.0 | 12.1 | 18 | 50 | Substantially amorphous |
| 5* | 4.88 | 1.5 | 16.1 | 18 | 49 | Substantially amorphous |
| 6 | 3.63 | 2.2 | 160 | 181 | 4 | Substantially amorphous |
| *** - NaCl used in catalyst preparation.** | | | | | | |

Figure 1 graphically demonstrates the difference between a crystalline catalyst such as that produced in Comparative Example 2 and the substantially amorphous catalysts made by Comparative Example 1 and in one embodiment of the inventive process as represented by Example 5. As can be appreciated by reference to Fig. 1, the crystalline catalyst of Comparative Example 2 has numerous sharp lines in the X-ray diffraction pattern, whereas the substantially amorphous catalysts made in Comparative Example 1 and in Example 5 do not.

Catalyst Activity

Several of the catalysts made herein were evaluated for propoxylation activity by preparing a 6000 Da triol from a glycerin-based PO, block polyol having an OH number of 238 and a functionality of about 3. Briefly, a polyol reactor was equipped with two six-inch pitched blade turbines, a Rushton turbine at the bottom of the impeller shaft and baffles. A dip tube delivered the oxide feed to the reactor just below the Rushton turbine. The unit provided approximately 7.9-9.8 $KW/m^3$ (40-50 horsepower/1000) gallons of mixing power when the filled reactor operated at 600 rpm. Rates were calculated by monitoring drops in PO partial pressures the moment oxide addition was completed. To reduce or eliminate mass transfer initiations between the liquid and vapor phases, the batch size was set such that the last blade was half covered to encourage maximum interfacial mixing.

Calculated apparent rate constants ($k_{app}$) are shown in Table II below. These values were determined by plotting the natural logarithm of PO partial pressure versus time and determining the slope of the resultant straight line.

**TABLE II**

| Ex. No. | Viscosity (cSt @ 25°C) | OH Number (mgKOH/g) | Unsaturation (meq/g) | Catalyst (ppm) | Activity ($k_{app}$) |
|---|---|---|---|---|---|
| C-1 | 1512 | 27.9 | 0.005 | 24 | 2.17 |
| 4* | 1800 | 28.1 | 0.006 | 24 | 1.24 |
| 5* | 1610 | 28.0 | 0.007 | 24 | 2.19 |
| *** - NaCl used in catalyst preparation** | | | | | |

## Claims

1. A process for preparing a double metal cyanide (DMC) catalyst, comprising reacting in aqueous solution at a molar ratio of water to total cations of less than 150:

    a transition metal salt having an alkalinity of at least 2 wt.% as transition metal oxide, based on the amount of transition metal salt; with
    a metal cyanide salt, at a molar ratio of transition metal to cyanide salt metal of less than 2.9:1,

    in the presence of an organic complexing ligand at a molar ratio of organic complexing ligand to transition metal of greater than 1, and in the presence of a cyanide-free compound comprising an anion and an alkali metal at a molar ratio of cyanide-free anion to metal cyanide salt anion of greater than 3, wherein the amount of cyanide-free anion is the sum of those from the alkali metal salt and the transition metal salt.

2. The process according to Claim 1, wherein the transition metal salt is chosen from zinc chloride, zinc bromide, zinc acetate, zinc acetonylacetate, zinc benzoate, zinc nitrate, iron(II) sulfate, iron(II) bromide, cobalt(II) chloride, cobalt (II) thiocyanate, nickel(II) formate, nickel(II) nitrate and mixtures thereof.

3. The process according to Claim 1, wherein the transition metal salt is zinc chloride.

4. The process according to Claim 1, wherein the metal cyanide salt is chosen from potassium hexacyanocobaltate (III), potassium hexacyanoferrate(II), potassium hexacyanoferrate(III), calcium hexacyanocobaltate(III) and lithium hexacyanoiridate(III).

5. The process according to Claim 1, wherein the metal cyanide salt is potassium hexacyanocobaltate(III).

6. The process according to Claim 1, wherein the organic complexing ligand is chosen from alcohols, aldehydes, ketones, ethers, esters, amides, ureas, nitrites, sulfides and mixtures thereof.

7. The process according to Claim 1, wherein the organic complexing ligand is chosen from 2-methyl-3-butene-2-ol, 2-methyl-3-butenyl-2-ol and tert-butyl alcohol (TBA).

8. The process according to Claim 1, wherein the cyanide-free compound is sodium chloride.

9. The process according to Claim 1, further including adding a functionalized polymer following the step of reacting.

10. The process according to Claim 9, wherein the functionalized polymer is a polyether polyol.

## Patentansprüche

1. Verfahren zur Herstellung eines Doppelmetallcyanidkatalysators (DMC-Katalysators), bei dem man in wäßriger Lösung bei einem Molverhältnis von Wasser zu Gesamtkationen von weniger als 150:

    ein Übergangsmetallsalz mit einer Alkalinität von mindestens 2 Gew.-% als Übergangsmetalloxid, bezogen auf

die Menge an Übergangsmetallsalz; mit einem Metallcyanidsalz bei einem Molverhältnis von Übergangsmetall zu Cyanidsalzmetall von weniger als 2,9:1
in Gegenwart eines organischen Komplexliganden bei einem Molverhältnis von organischem Komplexliganden zu Übergangsmetall von mehr als 1 und in Gegenwart einer cyanidfreien Verbindung mit einem Anion und einem Alkalimetall bei einem Molverhältnis von cyanidfreiem Anion zu Metallcyanidsalzanion von mehr als 3, wobei die Menge an cyanidfreiem Anion die Summe derjenigen aus dem Alkalimetallsalz und dem Übergangsmetallsalz ist, umsetzt.

**2.** Verfahren nach Anspruch 1, bei dem man das Übergangsmetallsalz unter Zinkchlorid, Zinkbromid, Zinkacetat, Zinkacetonylacetat, Zinkbenzoat, Zinknitrat, Eisen(II)-sulfat, Eisen(II)-bromid, Cobalt(II)-chlorid, Cobalt(II)-thiocyanat, Nickel(II)-formiat, Nickel(II)-nitrat und Mischungen davon auswählt.

**3.** Verfahren nach Anspruch 1, bei dem es sich bei dem Übergangsmetallsalz um Zinkchlorid handelt.

**4.** Verfahren nach Anspruch 1, bei dem man das Metallcyanidalz unter Kaliumhexacyanocobaltat(III), Kaliumhexacyanoferrat(II), Kaliumhexacyanoferrat(III), Calciumhexacyanocobaltat(III) und Lithiumhexacyanoiridat(III) auswählt.

**5.** Verfahren nach Anspruch 5, bei dem es sich bei dem Metallcyanidalz um Kaliumhexacyanocobaltat(III) handelt.

**6.** Verfahren nach Anspruch 1, bei dem man den organischen Komplexliganden unter Alkoholen, Aldehyden, Ketonen, Ethern, Estern, Amiden, Harnstoffen, Nitriten, Sulfiden und Mischungen davon auswählt.

**7.** Verfahren nach Anspruch 1, bei dem man den organischen Komplexliganden unter 2-Methyl-3-buten-2-ol, 2-Methyl-3-butenyl-2-ol und tert.-Butylalkohol (TBA) auswählt.

**8.** Verfahren nach Anspruch 1, bei dem es sich bei der cyanidfreien Verbindung um Natriumchlorid handelt.

**9.** Verfahren nach Anspruch 1, bei dem man ferner nach dem Umsetzungsschritt ein funktionalisiertes Polymer zugibt.

**10.** Verfahren nach Anspruch 9, bei dem es sich bei dem funktionalisierten Polymer um ein Polyetherpolyol handelt.

## Revendications

**1.** Procédé de préparation d’un catalyseur à base de cyanure métallique double (DMC), comprenant la réaction en solution aqueuse, dans un rapport du nombre de moles d’eau au nombre total de moles de cations inférieur à 150 :

d’un sel de métal de transition ayant une alcalinité d’au moins 2% en poids exprimée en oxyde de métal de transition, par rapport à la quantité de sel de métal de transition ; avec
un sel cyanure métallique, dans un rapport du nombre de moles de métal de transition au nombre de moles de métal du sel cyanure inférieur à 2,9:1,

en présence d’un ligand complexant organique, dans un rapport du nombre de moles de ligand complexant organique au nombre de moles de métal de transition supérieur à 1, et en présence d’un composé sans cyanure comprenant un anion et un métal alcalin dans un rapport du nombre de moles d’anion sans cyanure au nombre de moles d’anion de sel cyanure métallique supérieur à 3,
dans lequel la quantité d’anions sans cyanure est la somme de ceux provenant du sel de métal alcalin et du sel de métal de transition.

**2.** Procédé selon la revendication 1, dans lequel le sel de métal de transition est choisi parmi le chlorure de zinc, le bromure de zinc, l’acétate de zinc, l’acétonylacétate de zinc, le benzoate de zinc, le nitrate de zinc, le sulfate de fer (II), le bromure de fer (II), le chlorure de cobalt (II), le thiocyanate de cobalt (II), le formiate de nickel (II), le nitrate de nickel (II) et leurs mélanges.

**3.** Procédé selon la revendication 1, dans lequel le sel de métal de transition est le chlorure de zinc.

**4.** Procédé selon la revendication 1, dans lequel le sel cyanure métallique est choisi parmi l’hexacyanocobaltate (III) de potassium, l’hexacyanoferrate (II) de potassium, l’hexacyanoferrate (III) de potassium, l’hexacyanocobaltate (III)

de calcium et l'hexacyanoiridate (III) de lithium.

5. Procédé selon la revendication 1, dans lequel le sel cyanure métallique est l'hexacyanocobaltate (III) de potassium.

6. Procédé selon la revendication 1, dans lequel le ligand complexant organique est choisi parmi les alcools, les aldéhydes, les cétones, les éthers, les esters, les amides, les urées, les nitrites, les sulfures et leurs mélanges.

7. Procédé selon la revendication 1, dans lequel le ligand complexant organique est choisi parmi le 2-méthyl-3-butène-2-ol, le 2-méthyl-3-butény1-2-ol et l'alcool t-butylique (TBA).

8. Procédé selon la revendication 1, dans lequel le composé sans cyanure est le chlorure de sodium.

9. Procédé selon la revendication 1, comprenant en outre l'addition d'un polymère fonctionnalisé après l'étape de réaction.

10. Procédé selon la revendication 9, dans lequel le polymère fonctionnalisé est un polyéther-polyol.

Fig.1

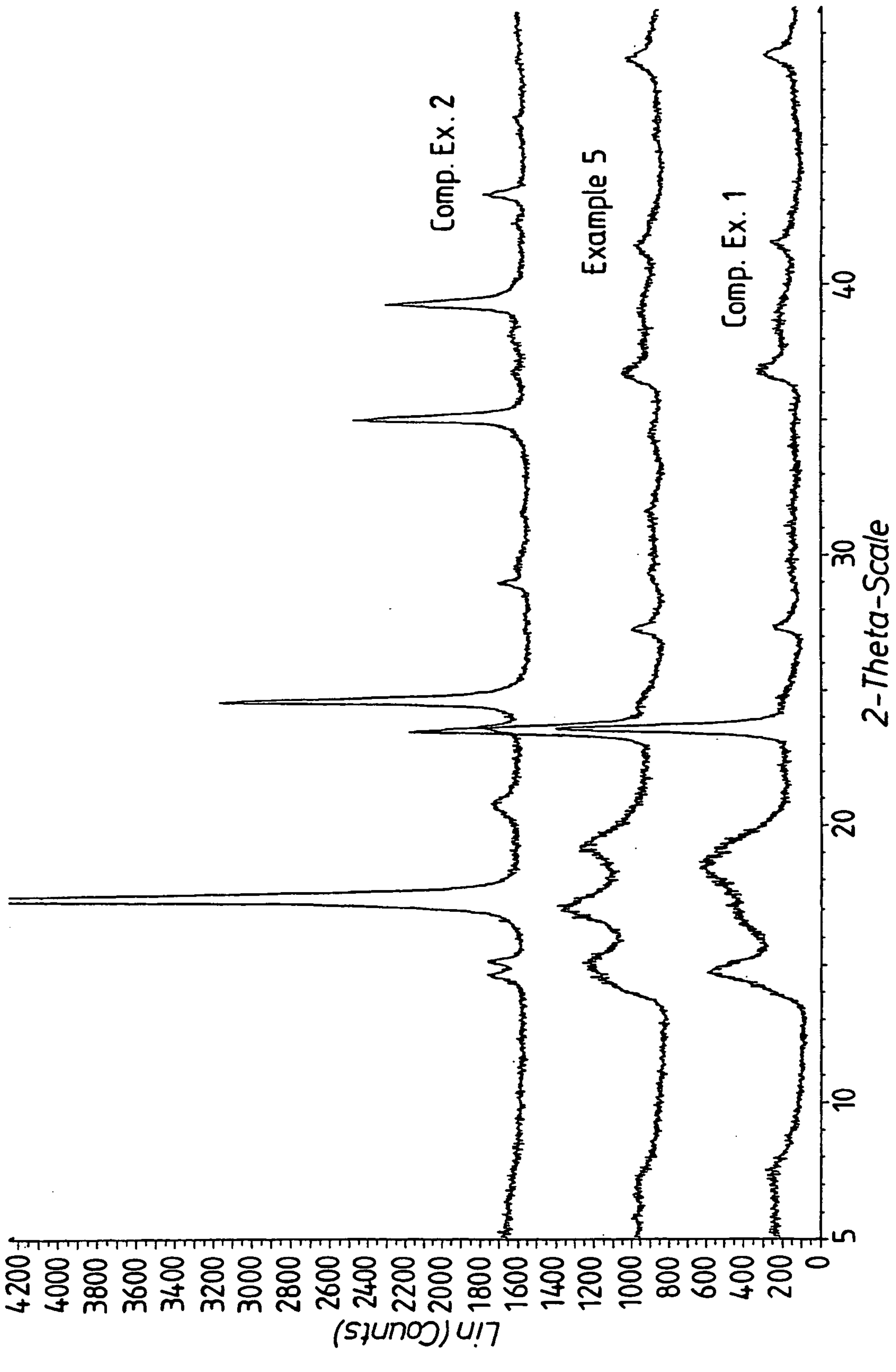
Comp. Ex. 2
Example 5
Comp. Ex. 1
Lin (Counts)
0
200
400
600
800
1000
1200
1400
1600
1800
2000
2200
2400
2600
2800
3000
3200
3400
3600
3800
4000
4200
5
10
20
30
40
2-Theta-Scale

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3404109 A
- US 3829505 A
- US 3941849 A
- US 5158922 A
- US 5470813 A
- US 5482908 A
- US 5545601 A
- US 5627122 A
- US 5783513 A
- US 6696383 B
- US 5952261 A
- US 6716788 B
- EP 1510534 A
- US 6204357 B
- US 6391820 B
- US 6468939 B
- US 6528616 B
- US 6586564 B
- US 6586566 B
- US 6608231 B
- US 5639705 A